# EUROPÄISCHE PATENTSCHRIFT

(11) **EP 2 821 285 B1**
(45) Veröffentlichungstag und Bekanntmachung des Hinweises auf die Patenterteilung: **25.05.2016**
(21) Anmeldenummer: 14172673.7
(22) Anmeldetag: 17.06.2014
(51) Int. Cl.: B60R 13/04, B60R 19/44, F16B 5/12

(54) **Verbindungselement zur Befestigung von Zierleisten auf einem Stoßfänger**
Connecting element for fastening trims on a bumper
Élément de raccordement destiné à la fixation de baguettes sur un pare-chocs

(30) Priorität: 01.07.2013 DE 202013102879 U
(43) Veröffentlichungstag der Anmeldung: 07.01.2015
(73) Patentinhaber: SMP Deutschland GmbH, 79268 Bötzingen (DE)
(72) Erfinder: Otto, Peter, 22869 Schenefeld (DE); Schmidt, Gunter, 79115 Freiburg (DE); Kiener, Frank, 79279 Vörstetten (DE)
(74) Vertreter: Westphal, Mussgnug & Partner Patentanwälte mbB

(56) Entgegenhaltungen:
- DE-A1- 19 803 402
- DE-A1-102007 006 337
- DE-C1- 4 037 706
- DE-U1- 29 705 942
- JP-A- S61 261 146

## Beschreibung

Die vorliegende Erfindung betrifft eine Baugruppe, bestehend aus einer Zierleiste, einem Stoßfänger und wenigstens einem die Zierleiste mit dem Stoßfänger verbindenden Verbindungselement nach dem Oberbegriff des Anspruchs 1. Insbesondere betrifft die Erfindung eine Baugruppe für ein Kraftfahrzeug.

Beim Verbinden von Zierleisten mit Stoßfängern werden im Allgemeinen an den Zierleisten angeordnete Rasthaken mit in den Stoßfänger gestanzten Durchbrüchen verrastet.

Die DE 198 03 402 A1, die den Oberbegriff des Anspruchs 1 bildet, beschäftigt sich mit einer Anordnung zur Befestigung eines Formteils an einem Karosseriekörper mittels eines leistenartigen Halteteils, das an dem Karosseriekörper arretierbar und zur Halterung des Formteils hergerichtet ist und offenbart eine Baugruppe mit einer Zierleiste, einem Stoßfänger mit Durchbrüchen, sowie wenigstens ein die Zierleiste mit dem Stoßfänger verbindendes Verbindungselement, welches erste Verbindungsmittel aufweist, die die Zierleiste mit dem Verbindungselement verbinden, und welches zweite Verbindungsmittel aufweist, die den Stoßfänger mit dem Verbindungselement verbinden.

Bei der Verrastung der Zierleiste werden, um den späteren Halt der Zierleiste am Stoßfänger zu gewährleisten, die Rasthaken Biegekräften und Biegebewegungen ausgesetzt. Durch diese während der Verrastung auftretende mechanische Belastung der Rasthaken können die Rasthaken abbrechen. Dies ist insbesondere bei Chromzierleisten oder verchromten Zierleisten ein Problem. Verchromte Zierleisten weisen heutzutage nämlich meist einen Kunststoffkern auf, der verchromt wird. Die Rasthaken werden beim Verchromungsvorgang mitverchromt. Da der Metallüberzug keine Bewegungen der Rasthaken zulässt, brechen solche chroinummantelten Rasthaken von den Zierleisten häufig ab, wenn die Zierleiste am Stoßfänger befestigt wird.

Aufgabe der vorliegenden Erfindung ist es, dieses Problem zu lösen und eine Verbindungsvorrichtung vorzusehen, bei der zwischen der Zierleiste und dem Stoßfänger keine solchen Biegekräfte bei der Montage auftreten.

Diese Aufgabe wird gelöst durch eine Baugruppe nach Anspruch 1. Vorteilhafte Ausführungsformen sind in den Unteransprüchen offenbart.

Die erfinderische Baugruppe weist eine Zierleiste, einen Stoßfänger mit Durchbrüchen und wenigstens ein die Zierleiste mit dem Stoßfänger verbindendes Verbindungselement auf. Dabei wird das wenigstens eine Verbindungselement zwischen der Zierleiste und dem Stoßfänger angeordnet, wobei dieses wenigstens eine Verbindungselement erste Verbindungsmittel aufweist, die die Zierleiste mit dem Verbindungselement verbinden, sowie zweite Verbindungsmittel, die den Stoßfänger mit dem Verbindungselement verbinden. Erfindungsgemäß stützen sich die ersten Befestigungsmittel an den Durchbruchkanten des Stoßfängers ab, wenn sie über das wenigstens eine Verbindungselement mit dem Stoßfänger verbunden sind.

Über ein derartiges Verbindungselement kann sichergestellt werden, dass beim Befestigen der Zierleiste am Stoßfänger keine derartigen Biegekräfte auftreten.

Das wenigstens eine Verbindungselement, das zwischen der Zierleiste und dem Stoßfänger angeordnet ist, ist vorteilhafterweise leistenförmig ausgebildet, und zwar so, dass es in der fertiggestellten Baugruppe nicht sichtbar zwischen Zierleiste und Stoßfänger angeordnet werden kann.

Damit die Zierleiste mit dem Verbindungselement verbunden werden kann, weist sie erste Befestigungsmittel auf, die in die ersten Verbindungsmittel des Verbindungselementes einrastend eingreifen, wenn die Zierleiste mit dem wenigstens einen Verbindungselement verbunden ist.

Da die Zierleiste starr ausgebildet ist und die ersten Befestigungsmittel der Zierleiste beim Befestigen der Zierleiste am Stoßfänger keine Biegekräfte erfahren dürfen, sind die ersten Verbindungsmittel vorteilhafterweise elastisch, vorzugsweise als Rastlaschen oder Federelemente ausgebildet.

Die ersten Befestigungsmittel sind vorteilhafterweise als Laschen und/oder als Bügel, vorzugsweise als U-förmige Laschen ausgebildet.

Die zweiten Verbindungsmittel, die in die Durchbrüche des Stoßfängers eingreifen, sind bevorzugt Rasthaken, die den Stoßfänger mit dem wenigstens einen Verbindungselement verbinden.

Die Zierleiste kann beispielsweise eine Chromzierleiste oder eine Kunststoffzierleiste oder eine verchromte Kunststoffzierleiste sein.

In einer bevorzugten Ausführungsform sind zwischen der Zierleiste und dem Stoßfänger wenigstens zwei Verbindungselemente angeordnet, die vorzugsweise die gleichen Ausmaße aufweisen und nebeneinander zwischen Stoßfänger und Zierleiste, beispielsweise symmetrisch zur Zierleistenmitte angeordnet sind.

In einer bevorzugten Ausführungsform des Verbindungselementes sind die ersten Verbindungsmittel zwischen den zweiten Verbindungsmitteln am Verbindungselement angeordnet. Dadurch wird gewährleistet, dass zu beiden Seiten einer Befestigungsstelle zwischen der Zierleiste und dem wenigstens einen Verbindungselement das wenigstens eine Verbindungselement an Durchbrüchen im Stoßfänger befestigt ist.

Vorteilhafterweise ist jedes erste Verbindungsmittel zwischen zwei zweiten Verbindungsmitteln in einer Reihe angeordnet. Die Abstände zwischen ersten Verbindungsmitteln und benachbart dazu angeordneten zweiten Verbindungsmitteln sind dabei vorteilhafterweise gleich.

Auf diese Weise bildet ein erstes Verbindungsmittel zusammen mit den beiden dem ersten Verbindungsmittel benachbarten beiden Verbindungsmitteln eine Dreiergruppe. Vorteilhafterweise weist das Verbindungselement mehrere voneinander beabstandete, vorzugsweise in einer Linie angeordnete, Dreiergruppen auf, die von je einem ersten Verbindungsmittel, das zwischen zwei zweiten Verbindungsmitteln angeordnet ist, und den beiden zum ersten Verbindungsmittel benachbarten zweiten Verbindungsmitteln gebildet werden.

Die Verbindungsmittel des Verbindungselementes sind vorteilhafterweise in wenigstens zwei, vorzugsweise übereinander angeordneten, Reihen an dem Verbindungselement angeordnet. Auf diese Weise können zum Beispiel, wenn die zweiten verbindungsmittel beispielsweise als Rasthaken ausgebildet sind, die in der oberen Reihe angeordneten Rasthaken in die oberen Durchbruchkanten der oberen Durchbrüche des Stoßfängers eingreifen, während die in der unteren Reihe ausgebildeten Rasthaken in die unteren Durchbruchkanten der unteren Durchbrüche des Stoßfängers eingreifen können, um so das Verbindungselement mit dem Stoßfänger zu verklemmen. Andererseits wird bei Zierleisten, die relativ breit sind, durch zwei übereinander angeordnete Reihen ein besserer Halt der Zierleiste gewährleistet.

Die Verbindungsmittel sind daher vorzugsweise in zwei übereinander angeordneten Reihen an dem Verbindungselement angeord-, net. Auf diese Weise können auch die ersten Verbindungsmittel beispielsweise mit den ersten Befestigungsmitteln der Zierleiste verklemmt werden, wenn nämlich zum Beispiel die Zierleiste an ihren oberen und an ihren unteren Enden Laschen mit gerasterten Oberflächen aufweist, in die die als elastische Rastlaschen ausgebildeten ersten Verbindungsmittel des wenigstens einen Verbindungselementes eingreifen. Die Verbindungsmittel sind bevorzugt mit dem Verbindungselement einstückig ausgebildet. Sie können beispielsweise aus Kunststoff bestehen und/oder Lasersinterteile sein.

Die erfinderische Zierleiste der Baugruppe weist vorzugsweise einteilig mit der Zierleiste ausgebildete erste Befestigungsmittel auf, die als, vorzugsweise U-förmige, Laschen und/oder Bügel zum Verbinden der Zierleiste mit wenigstens einem Verbindungselement ausgebildet sind.

Die Zierleiste kann eine, vorzugsweise als Lasersinterteil hergestellte, Chromzierleiste sein, eine verchromte Zierleiste oder eine Kunststoffleiste. Die vorzugsweise U-förmigen Laschen und/oder Bügel sind vorteilhafterweise ebenfalls verchromt.

In einer bevorzugten Ausführungsform sind die ersten Befestigungsmittel Laschen, die eine gerasterte Oberfläche aufweisen, in die die ersten Verbindungsmittel des wenigstens einen Verbindungselementes einrastend eingreifen, wenn das wenigstens eine Verbindungselement mit der Zierleiste verbunden ist. Die ersten Befestigungsmittel, die als, vorzugsweise U-förmige Laschen und/oder Bügel ausgebildet sind, sind auf der Zierleiste so angeordnet, dass sie in die Durchbrüche des Stoßfängers eingreifen, wenn das wenigstens eine Verbindungselement mit der Zierleiste und mit dem Stoßfänger verbunden ist.

Die Zierleiste kann auch zwei Seitenlaschen zum Fixieren der beiden Längsenden der Zierleiste an dem Stoßfänger aufweisen, wobei an jedem Längsende der Zierleiste jeweils eine Seitenlasche angeordnet ist, wobei die Seitenlaschen vorzugsweise einteilig mit der Zierleiste ausgebildet sind.

Die in der nachfolgenden Beschreibung verwendeten Bezeichnungen, wie "oben", "unten", "links" und "rechts" und ähnliches, beziehen sich auf Ausführungsbeispiele und sollen in keiner Weise einschränkend sein, auch dann nicht, wenn sie sich auf bevorzugte Ausführungsformen beziehen.

Die Erfindung wird nachfolgend anhand von Zeichnungen näher erläutert. Es zieigen:
- Fig. 1: einen Teil eines Verbindungselementes,
- Fig. 2: in der oberen Darstellung eine Zierleiste mit zwei darin angeordneten Verbindungselementen, in der unteren Zeichnung eine vergrößerte Ansicht eines Teiles der oberen Darstellung mit einem Teil eines Verbindungselementes,
- Fig. 3: eine Ansicht eines Teiles eines Stoßfängers mit einem Teil eines daran befestigten Verbindungselementes in der Sicht auf die Rückseite des Stoßfängers,
- Fig. 4: einen Querschnitt durch die erfinderische Baugruppe entlang der Schnittlinie A-A,
- Fig. 5: einen Querschnitt durch die Baugruppe entlang der Schnittlinie B-B,
- Fig. 6: das Endstück einer Zierleiste.

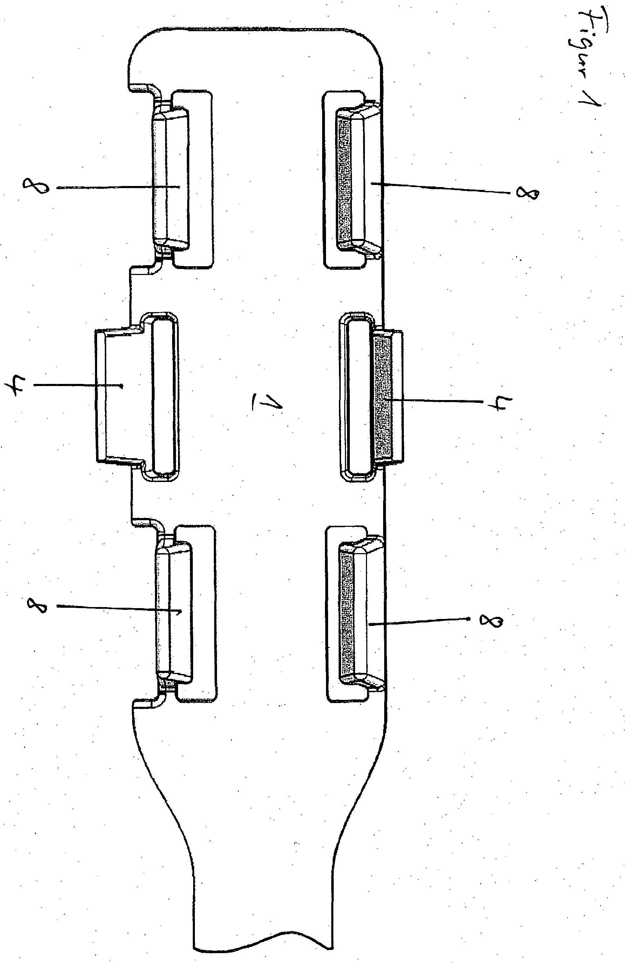

Figur 1 zeigt ein Verbindungselement 1 mit ersten Verbindungsmitteln 4, beispielsweise in Form von Rastlaschen, zum Verbinden einer Zierleiste 6 mit dem ersten Verbindungselement 1, sowie zweite Verbindungsmittel 8 in Form von beispielsweise Rasthaken zum Verbinden des Verbindungselementes 1 mit einem Stoßfängers 10. Die ersten Verbindungsmittel 4 und die zweiten Verbindungsmittel 8 des Verbindungselementes 1 sind jeweils benachbart zu Ausnehmungen 12 angeordnet, was beispielsweise, wenn die Verbindungsmittel 4, 8 einstückig mit dem Verbindungselement 1 ausgebildet sind, dazu führt, dass beispielsweise die ersten Verbindungsmittel 4 eine Elastizität aufweisen und so elastisch in die ersten Befestigungsmittel 14 der Zierleiste 6 eingreifen können. Die Verbindungsmittel 4, 8 in Figur 1 sind in zwei übereinander liegenden Dreiergruppen angeordnet. Das Verbindungselement 1 erstreckt sich auf der rechten Seite von Figur 1 weiter bis zu den nächsten beiden Dreiergruppen.

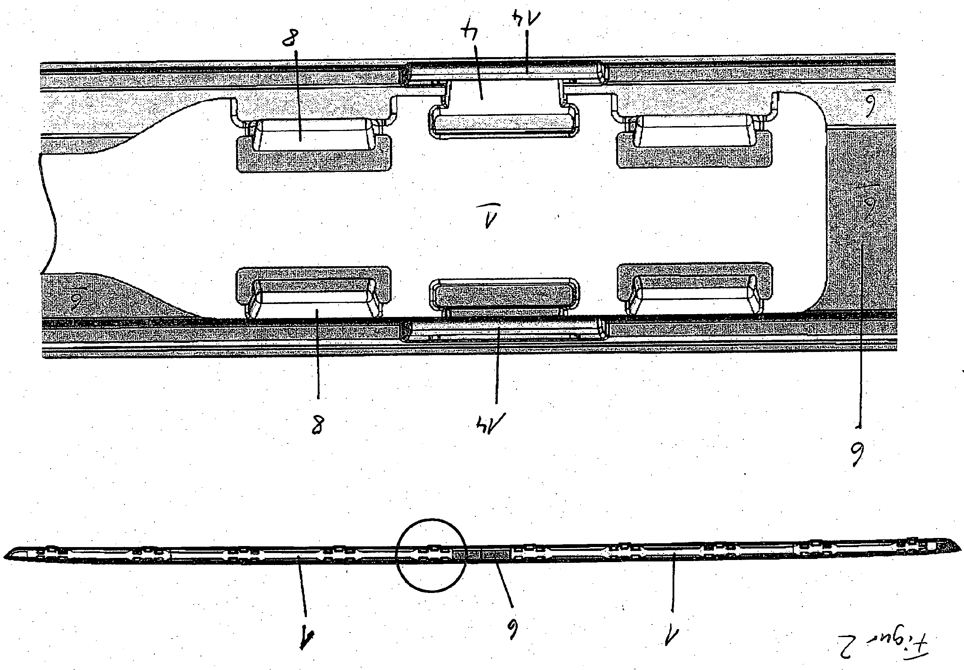

Das obere Bild von Figur 2 zeigt eine Zierleiste 6, in welcher zwei Verbindungselemente 1 angeordnet sind. Das untere Bild von Figur 2 zeigt eine vergrößerte Darstellung eines Teiles eines an der Zierleiste 6 angeordneten Verbindungselementes 1. Die ersten Verbindungsmittel 4 des einen Verbindungselementes 1 greifen elastisch in die ersten Befestigungsmittel 14 des Zierleiste 6 ein. Die ersten Befestigungsmittel 14 der Zierleiste 6 sind als Laschen ausgebildet, die eine gerasterte Oberfläche aufweisen, in die die ersten Verbindungsmittel 4 des einen Verbindungselementes 1 einrastend eingreifen können, wenn das eine Verbindungselement 1 mit der Zierleiste 6 ver-, bunden ist.

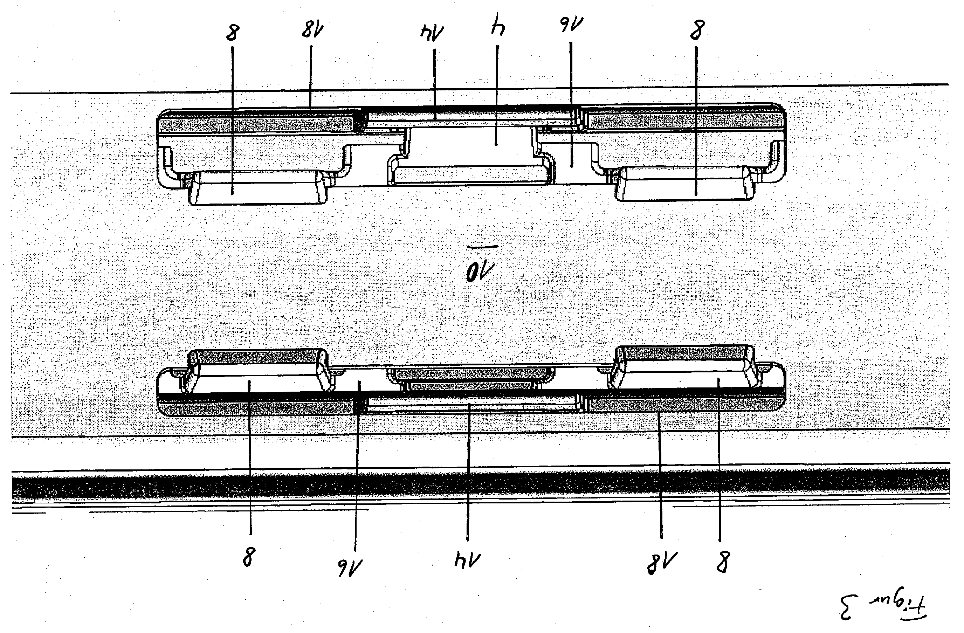

Figur 3 zeigt den Stoßfänger 10 von der der Zierleiste abgewandten Rückseite. Im Stoßfänger 10 sind Durchbrüche 16 angelordnet, in welche die zweiten Verbindungsmittel 8 und die ersten Befestigungsmittel 14 eingreifen. Die ersten Befestigungsmittel 14 stützen sich dabei an den Durchbruchkanten 18 der Durchbrüche 16 des Stoßfängers 10 ab.

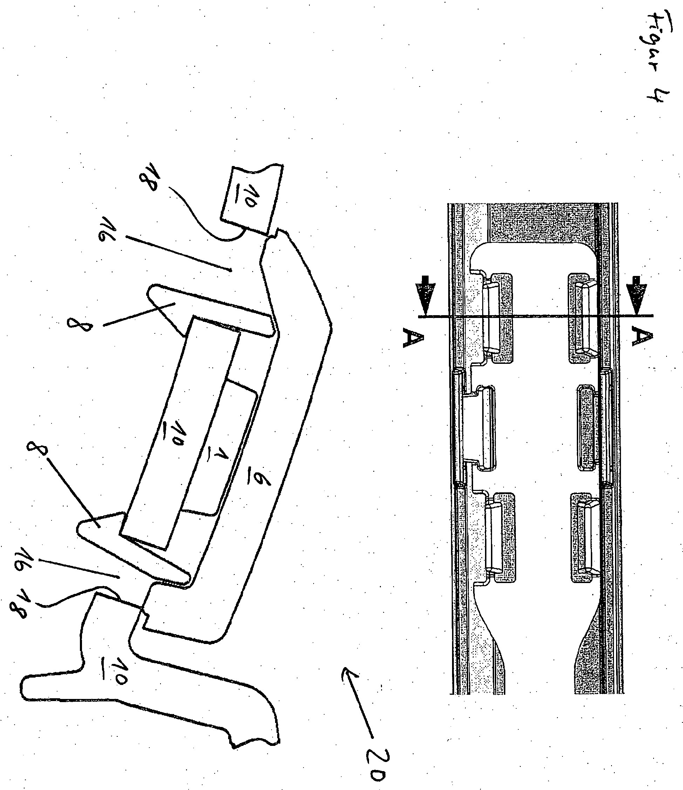

Figur 4 zeigt einen Querschnitt durch eine Baugruppe 20, bestehend aus einem Verbindungselement 1, einer Zierleiste 6, die mit dem Verbindungselement 1 verbunden ist, sowie einem Stoßfänger 10, der ebenfalls mit dem Verbindungselement 1 verbunden ist. Der Schnitt entlang der Linie A-A ist ein Schnitt an einer Stelle, an welcher das zweite Verbindungsmittel 8 mit dem Stoßfänger 10 verbunden ist.

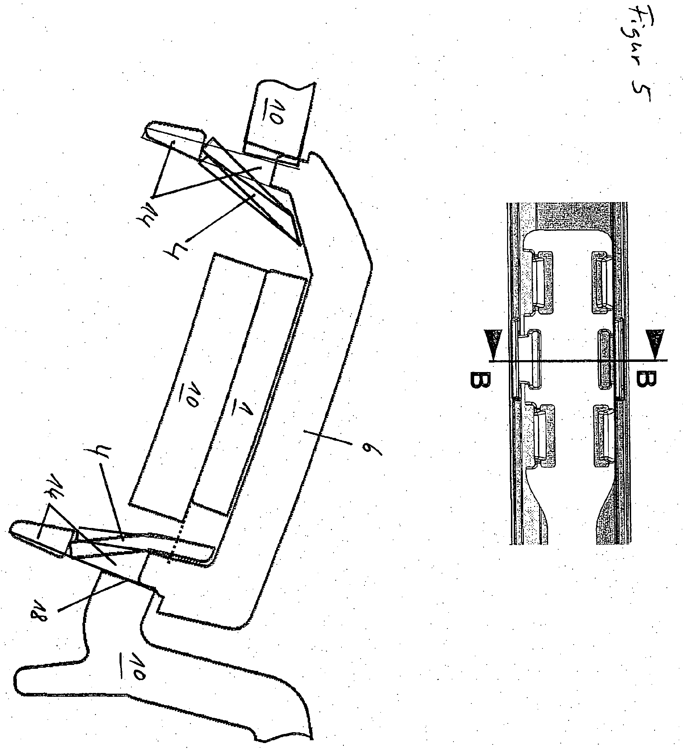

Figur 5 zeigt einen Schnitt durch die Baugruppe 20 an der Schnittlinie B-B, an welcher das erste Verbindungsmittel 4 mit der Zierleiste 6 verbunden ist. Die als Laschen ausgebildeten ersten Befestigungsmittel 14 der Zierleiste 6 greifen durch die Durchbrüche 16 des Stoßfängers 10 und stützen sich an den Durchbruchkanten 18 des Stoßfängers 10 ab.

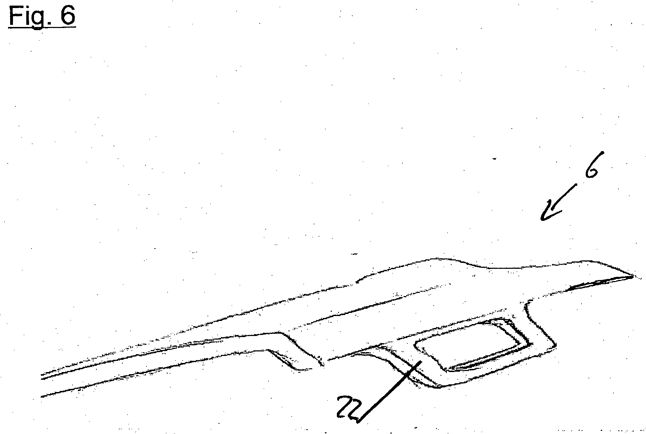

Figur 6 zeigt das seitliche Ende einer Zierleiste 6 mit einer Seitenlasche 22.

Die im Ausführungsbeispiel beschriebene Zierleiste 6 ist eine Chromzierleiste, die in diesem Fall eine Länge von 1440 mm aufweist und durch eine Person sehr leicht montiert und verrastet werden kann. Die Chromzierleiste kann selbstverständlich auch eine andere Länge aufweisen.

Die hier beschriebene Befestigungsmethode einer Chromzierleiste 6 auf einem Stoßfänger 10 führt zu einer Befestigung, die selbst bei Torsionsbewegungen des Stoßfängers 10 einen festen Sitz der Chromzierleiste 6 auf dem Stoßfänger 10 gewährleistet.

Bei der Montage der Zierleiste 6 treten praktisch keine Torsionskräfte zwischen der Zierleiste 6 und ihren Befestigungsmitteln 14 auf. Die Zierleiste 6 kann so auf dem Stoßfänger 10 befestigt werden, dass beispielsweise zunächst die zweiten Verbindungsmittel 8 der beiden Verbindungselemente 1 in die Durchbrüche 16 des Stoßfängers 10 eingerastet werden. Wenn die Verbindungselemente 1 am Stoßfänger 10 befestigt sind, kann die Zierleiste 6 auf die Verbindungselemente 1 so aufgerastet werden, dass die ersten Verbindungsmittel 4, die als Rastlaschen ausgebildet sind, in die als Laschen mit Rasterungen ausgebildeten ersten Befestigungsmittel 14 einrastend eingreifen. Durch einen leichten Druck auf die Zierleiste 6 in Richtung Stoßfänger 10 kann dann gewährleistet werden, dass die ersten Befestigungsmittel 14 an den Durchbruchkanten 18 der Durchbrüche 6 im Stoßfänger 10 einrasten und sich an ihnen abstützen. Die Seitenlaschen 22 der Zierleiste 6 können während dieses Vorgangs gleichzeitig in entsprechende Ausnehmungen des Stoßfängers 10 aufgenommen werden.

Die Erfindung wurde anhand eines bevorzugten Ausführungsbeispiels erläutert, ohne auf dieses Ausführungsbeispiel beschränkt zu sein. Die Zierleiste beispielsweise kann eine Chromzierleiste oder auch eine Kunststoffzierleiste oder jede andere Zierleiste sein. Die Befestigungsmethode ist auch nicht an eine bestimmte Länge der Zierleiste gebunden. Auch die Anzahl der Verbindungselemente 1, die zwischen der Zierleiste 6 und dem Stoßfänger 10 angeordnet werden, kann variieren. Schließlich kann anstatt eines Stoßfängers auch ein anderes Element beispielsweise eines Kraftfahrzeugs verwendet werden, welches entsprechende Ausnehmungen oder Durchbrüche aufweist, um die Zierleiste 6 an diesem anderen Element in der oben beschriebenen Weise zu befestigen.

### Bezugszeichenliste

- 1: Verbindungselement
- 4: erstes Verbindungsmittel
- 6: Zierleiste
- 8: zweites Verbindungsmittel

- 10: Stoßfänger
- 12: Ausnehmung
- 14: erstes Befestigungsmittel
- 16: Durchbruch
- 18: Durchbruchkante

- 20: Baugruppe
- 22: Seitenlasche

## Patentansprüche

1. Baugruppe (20), aufweisend eine Zierleiste (6), einen Stoßfänger (10) mit Durchbrüchen (16) und wenigstens ein die Zierleiste mit dem Stoßfänger verbindendes Verbindungselement (1), wobei das wenigstens eine Verbindungselement (1) zwischen der Zierleiste (6) und dem Stoßfänger (10) angeordnet ist, wobei das wenigstens eine Verbindungselement (1) erste Verbindungsmittel (4) aufweist, die die Zierleiste (6) mit dem Verbindungselement (1) verbinden, und zweite Verbindungsmittel (8) aufweist, die den Stoßfänger (10) mit dem Verbindungselement (1) verbinden,
**dadurch gekennzeichnet, dass**
die Zierleiste (6) erste Befestigungsmittel (14) aufweist, die sich an Durchbruchkanten (18) des Stoßfängers (10) abstützen, wenn die ersten Befestigungsmittel (14) über das wenigstens eine Verbindungselement (1) mit dem Stoßfänger (10) verbunden sind.

2. Baugruppe (20) nach Anspruch 1,
**dadurch gekennzeichnet, dass**
das wenigstens eine Verbindungselement (1) leistenförmig ausgebildet ist.

3. Baugruppe (20) nach Anspruch 1 oder 2,
**dadurch gekennzeichnet, dass**
die ersten Verbindungsmittel (4) in die ersten Befestigungsmittel (14) einrastend eingreifen, wenn die Zierleiste mit dem wenigstens einen Verbindungselement (1) verbunden ist.

4. Baugruppe (20) nach einem der vorigen Ansprüche,
**dadurch gekennzeichnet, dass** die ersten Verbindungsmittel (4) elastisch ausgebildete Verbindungsmittel, vorzugsweise Rastlaschen oder Federelemente, sind.

5. Baugruppe (20) nach einem der vorigen Ansprüche,
**dadurch gekennzeichnet, dass**
die ersten Befestigungsmittel (14) als, vorzugsweise U-förmige, Laschen und/oder Bügel ausgebildet sind.

6. Baugruppe (20) nach einem der vorigen Ansprüche,
**dadurch gekennzeichnet, dass**
die zweiten Verbindungsmittel (8) Rasthaken sind, die in die Durchbrüche (16) des Stoßfängers (10) eingreifen, wenn der Stoßfänger (10) mit dem wenigstens einen Verbindungselement (1) verbunden ist.

7. Baugruppe (20) nach einem der vorigen Ansprüche,
**dadurch gekennzeichnet, dass**
die Zierleiste (6) eine Chromzierleiste oder eine Kunststoffzierleiste oder eine verchromte Kunststoffzierleiste ist.

8. Baugruppe (20) nach einem der vorigen Ansprüche,
**dadurch gekennzeichnet, dass** wenigstens zwei Verbindungselemente (1) zwischen der Zierleiste (6) und dem Stoßfänger (10) angeordnet sind.

9. Baugruppe (20) nach einem der vorigen Ansprüche,
**dadurch gekennzeichnet, dass**
das Verbindungselement (1) erste Verbindungsmittel (4), zum Verbinden der Zierleiste (6) mit dem Verbindungselement (1) und zweite Verbindungsmittel (8), zum Verbinden des Stoßfängers (10) mit dem Verbindungselement (1), aufweist.

10. Baugruppe (20) nach Anspruch 9,
**dadurch gekenntzeichnet,** dass
die ersten Verbindungsmittel (4) zwischen den zweiten Verbindungsmitteln (8) am Verbindungselement (1) angeordnet sind.

11. Baugruppe (20) nach Anspruch 9 oder 10,
**dadurch gekennzeichnet, dass**
jedes erste Verbindungsmittel (4) zwischen zwei zweiten Verbindungsmitteln (8) in einer Reihe angeordnet ist.

12. Baugruppe (20) nach Anspruch 10 oder 11,
**dadurch gekennzeichnet, dass**
die Abstände zwischen ersten Verbindungsmitteln und benachbart dazu angeordneten zweiten Verbindungsmitteln im Wesentlichen gleich sind.

13. Baugruppe (20) nach einem der Ansprüche 10 bis 12,
**dadurch gekennzeichnet, dass**
ein erstes Verbindungsmittel (4) zusammen mit den beiden dem ersten Verbindungsmittel (4) benachbarten zweiten Verbindungsmitteln (8) eine Dreiergruppe bildet und das Verbindungselement (1) mehrere voneinander beabstandete, vorzugsweise in einer Linie angeordnete, Dreiergruppen aufweist, die von je einem ersten Verbindungsmittel (4), das zwischen zwei zweiten Verbindungsmitteln (8) angeordnet ist, und den zwei dem ersten Verbindungsmittel (4) benachbarten zweiten Verbindungsmitteln (8) gebildet werden.

14. Baugruppe (20) nach einem der Ansprüche 9 bis 13,
**dadurch gekennzeichnet, dass** die Verbindungsmittel (4, 8) in wenigstens zwei, vorzugsweise übereinander angeordneten, Reihen an dem Verbindungselement (1) angeordnet sind.

15. Baugruppe (20) nach einem der Ansprüche 9 bis 14,
**dadurch gekennzeichnet, dass** die Verbindungsmittel (4, 8) mit dem Verbindungselement (1) einstückig ausgebildet sind.

16. Baugruppe (20) nach einem der Ansprüche 9 bis 15,
**dadurch gekenntzeichnet,** dass
das Verbindungselement (1) aus Kunststoff besteht, und/oder ein Lasersinterteil ist.

17. Baugruppe (20) nach einem der Ansprüche 1 bis 8,
**dadurch gekennzeichnet, dass**
die ersten Befestigungsmittel (14) einteilig mit der Zierleiste (6) ausgebildet sind und als, vorzugsweise U-förmige, Laschen und/oder Bügel zum Verbinden der Zierleiste (6) mit wenigstens einem Verbindungselement (1) nach einem der Ansprüche 9 bis 16 ausgebildet sind.

18. Baugruppe (20) nach Anspruch 17,
**dadurch gekennzeichnet, dass**
die Zierleiste (6) eine, vorzugsweise als Lasersinterteil hergestellte, Chromzierleiste bzw. verchromte Zierleiste ist, und die, vorzugsweise U-förmigen, Laschen und/oder Bügel verchromt sind.

19. Baugruppe (20) nach Anspruch 17 oder 18,
**dadurch gekennzeichnet, dass**
die ersten Befestigungsmittel (14) Laschen sind, die eine gerasterte Oberfläche aufweisen, in die die ersten Verbindungsmittel (4) des wenigstens einen Verbindungselements (1) einrastend eingreifen, wenn das wenigstens eine Verbindungselement (1) mit der Zierleiste (6) verbunden ist.

20. Baugruppe (20) nach einem der Ansprüche 17 bis 19,
d**adurch gekennzeichnet,** dass
die, vorzugsweise U-förmigen, Laschen und/oder Bügel (14) so ausgebildet sind, dass sie in die Durchbrüche (18) des Stoßfängers (10) eingreifen, wenn das wenigstens eine Verbindungselement (1) mit der Zierleiste (6) und mit dem Stoßfänger (10) verbunden ist.

21. Baugruppe (20) nach einem der Ansprüche 17 bis 20,
**dadurch gekennzeichnet, dass**
die Zierleiste (6) zwei Seitenlaschen (22) zum Fixieren der beiden Längsenden der Zierleiste (6) an dem Stoßfänger (10) aufweist, wobei an jedem Längsende der Zierleiste (6) jeweils eine Seitenlasche (22) angeordnet ist, die vorzugsweise einteilig mit der Zierleiste (6) ausgebildet ist.

## Claims

1. Assembly (20), having a trim (6), a bumper (10) having perforations (16), and at least one connection element (1) connecting the trim to the bumper, wherein the at least one connection element (1) is arranged between the trim (6) and the bumper (10), wherein the at least one connection element (1) has first connection means (4) which connect the trim (6) to the connection element (1), and has second connection means (8) which connect the bumper (10) to the connection element (1), **characterised in that**
the trim (6) has first fastening means (14) which are supported on perforation edges (18) of the bumper (10) if the first fastening means (14) are connected to the bumper (10) via the at least one connection element (1).

2. Assembly (20) according to claim 1,
**characterised in that**
the at least one connection element (1) is formed to be strip-shaped.

3. Assembly (20) according to claim 1 or 2,
**characterised in that**
the first connection means (4) engage with the first fastening means (14) in a latching manner if the trim is connected to the at least one connection element (1).

4. Assembly (20) according to one of the preceding claims,
**characterised in that**
the first connection means (4) are elastically formed connection means, preferably locking latches or spring elements.

5. Assembly (2) according to one of the preceding claims,
**characterised in that**
the first fastening means (14) are formed as, preferably U-shaped, latches and/or brackets.

6. Assembly (20) according to one of the preceding claims,
**characterised in that**
the second connection means (8) are latching hooks which engage with the perforations (16) of the bumper (10) if the bumper (10) is connected to the at least one connection element (1).

7. Assembly (20) according to one of the preceding claims,
**characterised in that**
the trim (6) is a chromium trim or a plastic trim or a chromium-plated plastic trim.

8. Assembly (20) according to one of the preceding claims,
**characterised in that**
at least two connection elements (1) are arranged between the trim (6) and the bumper (10).

9. Assembly (20) according to one of the preceding claims,
**characterised in that**
the connection element (1) has first connection means (4) to connect the trim (6) to the connection element (1), and second connection means (8) to connect the bumper (10) to the connection element (1).

10. Assembly (20) according to claim 9,
**characterised in that**
the first connection means (4) are arranged on the connection element (1) between the second connection means (8).

11. Assembly (20) according to claim 9 or 10,
**characterised in that**
each first connection means (4) is arranged in a row between two second connection means (8).

12. Assembly (20) according to claim 10 or 11,
**characterised in that**
the distances between first connection means and second connection means arranged adjacently thereto are substantially identical.

13. Assembly (20) according to one of claims 10 to 12,
**characterised in that**
a first connection means (4), together with the two second connection means (8) which are adjacent to the first connection means (4), form a trio and the connection element (1) has several trios which are at a distance to one another and are preferably arranged in a line and which are each formed by a first connection means (4) which is arranged between two second connection means (8) and the two second connection means (8) which are adjacent to the first connection means (4).

14. Assembly (20) according to one of claims 9 to 13,
**characterised in that**
the connection means (4, 8) are arranged on the connection element (1) in a least two rows, preferably arranged one over the other.

15. Assembly (20) according to one of claims 9 to 14,
**characterised in that**
the connection means (4, 8) are formed in one piece with the connection element (1).

16. Assembly (20) according to one of claims 9 to 15,
**characterised in that**
the connection element (1) consists of plastic and/or is a laser-sintered part.

17. Assembly (20) according to one of claims 1 to 8,
**characterised in that**
the first fastening means (14) are formed in one piece with the trim (6) and are formed as, preferably U-shaped, latches and/or brackets to connect the trim (6) to at least one connection element (1) according to one of claims 9 to 16.

18. Assembly (20) according to claim 17,
**characterised in that**
the trim (6) is a chromium trim or chromium-plated trim, preferably produced as a laser-sintered part, and the preferably U-shaped latches and/or brackets are chromium-plated.

19. Assembly (20) according to claim 17 or 18,
**characterised in that**
the first fastening means (14) are latches which have a rasterised surface with which the first connection means (4) of the at least one connection element (1) engage in a latching manner if the at least one connection element (1) is connected to the trim (6).

20. Assembly (20) according to one of claims 17 to 19,
**characterised in that**
the preferably U-shaped latches and/or brackets (14) are formed in such a way that they engage with the perforations (18) of the bumper (10) if the at least one connection element (1) is connected to the trim (6) and to the bumper (10).

21. Assembly (20) according to one of claims 17 to 20,
**characterised in that**
the trim (6) has two side latches (22) to fix the two longitudinal ends of the trim (6) to the bumper (10), wherein a side latch (22) is arranged respectively on each longitudinal end of the trim (6), said side latch (22) preferably being formed in one piece with the trim (6).

## Revendications

1. Ensemble (20) comprenant une baguette décorative (6), un pare-choc (10) équipé d'ouvertures (16) et au moins un élément de liaison (1) reliant la baguette décorative et le pare-choc, dans lequel l'élément de liaison (1) est monté entre la baguette décorative (6) et le pare-choc (10), l'élément de liaison (1) comprend des premiers moyens de liaison (4) qui relient la baguette décorative (6) et l'élément de liaison (1) et des seconds moyens de liaison (8) qui relient le pare-choc (10) et l'élément de liaison (1),
**caractérisé en ce que**
la baguette décorative (6) comprend des premiers moyens de fixation (14) qui s'appuient sur les bords (18) des ouvertures du pare-choc (10) lorsque les premiers moyens de fixation (14) sont reliés au pare-choc (10) par l'élément de liaison (1).

2. Ensemble (20) conforme à la revendication 1,
**caractérisé en ce que**
l'élément de liaison (1) est réalisé en forme de baguette.

3. Ensemble (20) conforme à la revendication 1 ou 2,
**caractérisé en ce que**
les premiers moyens de liaison (4) viennent en prise par encliquetage dans les premiers moyens de fixation (14) lorsque la baguette décorative est reliée à l'élément de liaison (1).

4. Ensemble (20) conforme à l'une des revendications précédentes,
**caractérisé en ce que**
les premiers moyens de liaison (4) sont élastiques, et sont de préférence réalisés sous la forme de languettes d'encliquetage ou d'éléments de ressort.

5. Ensemble (20) conforme à l'une des revendications précédentes,
**caractérisé en ce que**
les premiers moyens de fixation (14) sont réalisés sous la forme d'étriers et/ou de languettes de préférence en forme de U.

6. Ensemble (20) conforme à l'une des revendications précédentes,
**caractérisé en ce que**
les seconds moyens de liaison (8) sont constitués par des crochets d'encliquetage qui viennent en prise dans les ouvertures (16) du pare-choc (10) lorsque ce pare-choc (10) est relié à l'élément de liaison (1).

7. Ensemble (20) conforme à l'une des revendications précédentes,
**caractérisé en ce que**
la baguette décorative (6) est une baguette décorative en chrome, ou une baguette décorative en matériau synthétique ou une baguette décorative en matériau synthétique chromé.

8. Ensemble (20) conforme à l'une des revendications précédentes,
**caractérisé en ce que**
au moins deux éléments de liaison (1) sont montés entre la baguette décorative (6) et le pare-choc (10).

9. Ensemble (20) conforme à l'une des revendications précédentes,
**caractérisé en ce que**
l'élément de liaison (1) comporte des premiers moyens de liaison (4) pour permettre de relier la baguette décorative (6) à l'élément de liaison (1) et des seconds moyens de liaison (8) pour permettre de relier le pare-choc (10) à l'élément de liaison (1).

10. Ensemble (20) conforme à la revendication 9,
**caractérisé en ce que**
les premiers moyens de liaison (4) sont montés sur l'élément de liaison (1) entre les seconds moyens de liaison (8).

11. Ensemble (20) conforme à la revendication 9 ou 10,
**caractérisé en ce que**
chacun des premiers moyens de liaison (4) est monté selon une rangée entre deux seconds moyens de liaison (8).

12. Ensemble (20) conforme à la revendication 10 ou 11,
**caractérisé en ce que**
les distances entre les premiers moyens de liaison et les seconds moyens de liaison voisins de ceux-ci sont essentiellement égales.

13. Ensemble (20) conforme à l'une des revendications 10 à 12,
**caractérisé en ce que**
des premiers moyens de liaison (4) forment avec les deux seconds moyens de liaison (8) voisins de ces premiers moyens de liaison (4) un groupe de trois éléments et l'élément de liaison (1) comporte plusieurs groupes de trois éléments situés à distance les uns des autres de préférence selon une droite, et qui sont formés chacun par des premiers moyens de liaison (4) qui sont situés entre deux seconds moyens de liaison (8) et les seconds moyens de liaison (8) voisins des premiers moyens de liaison (4).

14. Ensemble (20) conforme à l'une des revendications 9 à 13,
**caractérisé en ce que**
les moyens de liaison (4, 8) sont montés sur l'élément de liaison (1) sur au moins deux rangées situées de préférence l'une sur l'autre.

15. Ensemble (20) conforme à l'une des revendications 9 à 14,
**caractérisé en ce que**
les moyens de liaison (4, 8) sont réalisés en une seule pièce avec l'élément de liaison (1).

16. Ensemble (20) conforme à l'une des revendications 9 à 15,
**caractérisé en ce que**
l'élément de liaison (1) est réalisé en matériau synthétique et/ou est une pièce obtenue par frittage laser.

17. Ensemble (20) conforme à l'une des revendications 1 à 8,
**caractérisé en ce que**
les premiers moyens de fixation (14) sont réalisés en une seule partie avec la baguette décorative (6) et sont réalisés sous la forme d'étriers et/ou de languettes de préférence en forme de U pour permettre la liaison de la baguette décorative (6) avec au moins un élément de liaison (1) conforme à l'une des revendications 9 à 16.

18. Ensemble (20) conforme à la revendication 17,
**caractérisé en ce que**
la baguette décorative (6) est constituée par une baguette décorative chromée ou une baguette décorative en chrome de préférence obtenue par frittage laser, et les étriers et/ou languettes de préférence en forme de U sont chromés.

19. Ensemble (20) conforme à la revendication 17 ou 18,
**caractérisé en ce que**
les premiers moyens de fixation (14) sont constitués par des languettes ayant une surface crantée dans laquelle viennent en prise, par encliquetage, les premiers moyens de liaison (4) de l'élément de liaison (1) lorsque cet élément de liaison (1) est relié à la baguette décorative (6).

20. Ensemble (20) conforme à l'une des revendications 17 à 19,
**caractérisé en ce que**
les étriers et/ou languettes de préférence en forme de U (14) sont réalisés de façon à venir en prise dans les ouvertures (18) du pare-choc (10) lorsque l'élément de liaison (1) est relié à la baguette décorative (6) et au pare-choc (10).

21. Ensemble (20) conforme à l'une des revendications 17 à 20,
**caractérisé en ce que**
la baguette décorative (6) comporte deux languettes latérales (22) pour permettre de fixer les deux extrémités longitudinales de la baguette décorative (6) sur le pare-choc (10), sur chaque extrémité longitudinale de la baguette décorative (6) étant respectivement montée une languette latérale (22) qui est de préférence réalisée en une seule pièce avec la baguette décorative (6).
